# EUROPEAN PATENT APPLICATION

(11) **EP 4 738 154 A1**
(43) Date of publication of application: **06.05.2026**
(21) Application number: 24832114.3
(22) Date of filing: 28.06.2024
(51) Int. Cl.: G06F 21/31, G06T 7/00, G06V 40/10, G06V 40/50

(54) **AUTHENTICATION INFORMATION REGISTRATION DEVICE, AUTHENTICATION INFORMATION REGISTRATION METHOD, AND AUTHENTICATION INFORMATION REGISTRATION SYSTEM**

(30) Priority: 30.06.2023 JP 2023108859
(71) Applicant: Panasonic Intellectual Property Management Co., Ltd., Kadoma-shi, Osaka 571-0057 (JP)
(72) Inventor: TANAHASHI, Satoru, kadoma-shi, Osaka 571-0057 (JP); MURAMATSU, Takehiro, kadoma-shi, Osaka 571-0057 (JP)
(74) Representative: Eisenführ Speiser
(86) International application number: PCT/JP2024/023528
(87) International publication number: WO 2025/005256

(57) **Abstract**

An authentication information registration device includes an acquisition unit configured to acquire first authentication information used for first authentication of a person to be authenticated and second authentication information used for second authentication different from the first authentication, an authentication unit configured to authenticate the person to be authenticated based on the acquired first authentication information, and a registration unit configured to output information of the person to be authenticated and the second authentication information in association with each other and register the information of the person to be authenticated and the second authentication information in a storage device based on a result of the first authentication.

## Description

### TECHNICAL FIELD

The present disclosure relates to an authentication information registration device, an authentication information registration method, and an authentication information registration system.

### BACKGROUND ART

Patent Literature 1 discloses a method in which a plurality of factors including a plurality of factors selected by a user perform user authentication by determining a multi-factor password corresponding to different types of information used to authenticate the user. The multi-factor password is authenticated based on an authentication result of each of the plurality of factors and an authentication order of the selected factors, and at least one of the factors selected by the user belongs to a category different from those of the other factors.

### CITATION LIST

### PATENT LITERATURE

Patent Literature 1: JP2016-42376A

### SUMMARY OF INVENTION

### TECHNICAL PROBLEM

In recent years, use of authentication using a photograph (face image) obtained by capturing an image of the face of a person has increased in various places indoors and outdoors. However, in a case where a device captures a photograph in an environment in which the face of a person is irradiated with sunlight or illumination light, an environment in which the face of a person has low illuminance such as backlight, nighttime, or rainy weather, or the like, the face of a person appearing in the photograph is in a blown-out highlight state, a backlight state, or the like, and there is a possibility that the device cannot capture a feature of the face of a person used for authentication.

The present disclosure has been made in view of the above-described circumstances in the related art, and an object thereof is to provide an authentication information registration device, an authentication information registration method, and an authentication information registration system that acquire authentication data used for a plurality of different types of authentication.

### SOLUTION TO PROBLEM

The present disclosure provides an authentication information registration device including an acquisition unit configured to acquire first authentication information used for first authentication of a person to be authenticated and second authentication information used for second authentication different from the first authentication, an authentication unit configured to authenticate the person to be authenticated based on the acquired first authentication information, and a registration unit configured to output information of the person to be authenticated and the second authentication information in association with each other and register the information of the person to be authenticated and the second authentication information in a storage device based on a result of the first authentication.

The present disclosure provides an authentication information registration method performed by a registration device that registers authentication information used for authentication of a person to be authenticated, the authentication information registration method including an acquisition unit configured to acquire first authentication information used for first authentication of the person to be authenticated and second authentication information used for second authentication different from the first authentication, an authentication unit configured to authenticate the person to be authenticated based on the acquired first authentication information, and outputting and registering information of the person to be authenticated and the second authentication information in association with each other in a storage device based on a result of the first authentication.

The present disclosure provides an authentication information registration system including a first authentication information acquisition device configured to acquire first authentication information used for first authentication of a person to be authenticated, a second authentication information acquisition device configured to acquire second authentication information used for second authentication different from the first authentication, a storage device configured to record information of the person to be authenticated and the second authentication information used for the second authentication, and a registration device configured to communicate with the first authentication information acquisition device, the second authentication information acquisition device, and the storage device, in which the registration device acquires the first authentication information and the second authentication information, authenticates the person to be authenticated based on the acquired first authentication information, and outputs and registers the information of the person to be authenticated and the second authentication information in association with each other in the storage device based on a result of the first authentication.

### ADVANTAGEOUS EFFECTS OF INVENTION

According to the present disclosure, it is possible to acquire authentication data used for a plurality of different types of authentication.

### BRIEF DESCRIPTION OF DRAWINGS

FIG. 1 is a block diagram illustrating an internal configuration example of an authentication system according to a first embodiment.
FIG. 2 is a sequence diagram illustrating an operational procedure example of the authentication system according to the first embodiment.
FIG. 3 is a sequence diagram illustrating an operational procedure example of the authentication system according to the first embodiment.
FIG. 4 is a block diagram illustrating an internal configuration example of an authentication system according to a second embodiment.
FIG. 5 is a sequence diagram illustrating an operational procedure example of the authentication system according to the second embodiment.
FIG. 6 is a block diagram illustrating an internal configuration example of an authentication system according to a third embodiment.
FIG. 7 is a sequence diagram illustrating an operational procedure example of the authentication system according to the third embodiment.
FIG. 8 is a block diagram illustrating an internal configuration example of an authentication system according to a fourth embodiment.
FIG. 9 is a sequence diagram illustrating an operational procedure example of the authentication system according to the fourth embodiment.
FIG. 10 is a sequence diagram illustrating an operational procedure example of the authentication system according to the fourth embodiment.

### DESCRIPTION OF EMBODIMENTS

Hereinafter, embodiments in which configurations and operations of an authentication information registration device, an authentication information registration method, and an authentication information registration system according to the present disclosure are specifically disclosed will be described in detail with reference to the drawings as appropriate. However, unnecessarily detailed description may be omitted. For example, detailed description of well-known matters and redundant description of substantially the same configuration may be omitted. This is to avoid unnecessary redundancy of the following descriptions and to facilitate understanding of those skilled in the art. The accompanying drawings and the following description are provided for a person skilled in the art to fully understand the present disclosure, and are not intended to limit the subject matters described in the claims.

Each of authentication systems 100, 100A, 100B, and 100C described in the present disclosure enables multi-factor authentication or multi-modal authentication using a plurality of pieces of personal identification information by performing acquisition and registration of new authentication data for authenticating a user in a case where identity verification is performed by user authentication (personal authentication) using biometric information (a face image as an example in the present disclosure) of the user registered in advance.

The new authentication data referred to here may be biometric information such as a fingerprint, a vein, a palm print, a voice, or an iris, knowledge information (storage information) such as a personal identification number, a PIN code, or a secret question, or possession information such as an employee ID card number, a smartphone, an IC card, a credit card, a cash card, a driver's license, or an insurance card.

### (First Embodiment)

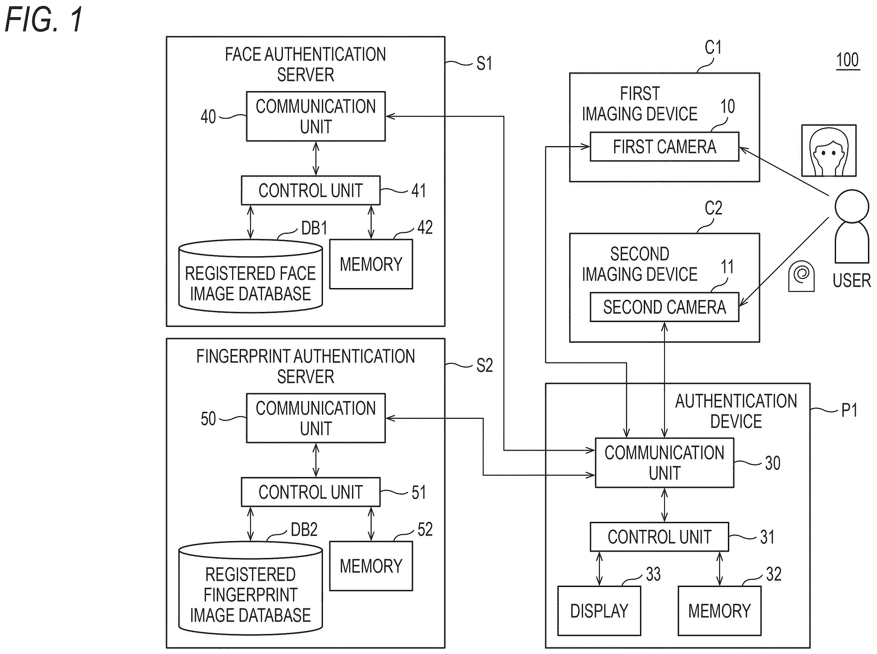

The authentication system 100 (an example of the authentication information registration system) according to a first embodiment will be described with reference to FIG. 1. FIG. 1 is a block diagram illustrating an internal configuration example of the authentication system 100 according to the first embodiment.

In the following description of the first embodiment, an example in which a fingerprint image of a user is acquired and registered as the new authentication data of the user will be described.

The authentication system 100 includes a first imaging device C1 (an example of a first authentication information acquisition device), a second imaging device C2 (an example of a second authentication information acquisition device), an authentication device P1 (an example of a registration device), a face authentication server S1, and a fingerprint authentication server S2 (an example of a storage device). The authentication system 100 illustrated in FIG. 1 is an example and is not limited thereto. The authentication system 100 may include any device capable of acquiring the new authentication data to be registered. The authentication system 100 may be the second imaging device C2 capable of capturing an image of a finger of the user as a device capable of acquiring a fingerprint image, or may be a sensor device capable of sensing a fingerprint of the user. The face authentication server S1 and the fingerprint authentication server S2 may be realized by one device.

For example, the authentication system 100 may include a network. The authentication device P1 and the face authentication server S1 may be connected so as to be able to transmit and receive data via a network, or may be integrally configured by one device or server. A registered face image database DB1 or a registered fingerprint image database DB2 may be configured separately from the face authentication server S1.

The first imaging device C1 is controlled by the authentication device P1 to capture an image of a region including the face of the user, and acquire a first captured image (a visible image) of the user used for authentication. The first imaging device C1 includes a first camera 10.

The first camera 10 includes at least an image sensor (not illustrated) and a lens (not illustrated). The image sensor is a solid-state imaging element including a Si photodiode, and for example a charged-coupled device (hereinafter, referred to as "CCD") or a complementary metal oxide semiconductor (hereinafter, referred to as "CMOS"), and converts an optical image formed on an imaging surface by visible light into an electric signal. The first camera 10 transmits the converted electric signal (data of the first captured image) to the authentication device P1.

The second imaging device C2 is controlled by the authentication device P1 to capture an image of a region including a finger of the user, and acquires a second captured image of the user used for authentication. The second imaging device C2 includes a second camera 11.

The second camera 11 includes at least an image sensor (not illustrated) and a lens (not illustrated). The image sensor is a solid-state imaging device including a Si photodiode and, for example, a CCD or a CMOS, and converts an optical image formed on an imaging surface by incident light into an electric signal. The second camera 11 transmits the converted electric signal (data of the second captured image) to the authentication device P1.

The authentication device P1 is realized by, for example, a personal computer (hereinafter, referred to as "PC"), a notebook PC, a tablet terminal, a smartphone, or the like, and performs authentication of a user who is an authentication target. The authentication device P1 includes a communication unit 30, a control unit 31, a memory 32, and a display 33.

The communication unit 30 (an example of an acquisition unit) is connected to the first camera 10 of the first imaging device C1, the second camera 11 of the second imaging device C2, a communication unit 40 of the face authentication server S1, and a communication unit 50 of the fingerprint authentication server S2 so as to be able to perform wireless communication or wired communication, and transmits and receives data.

The control unit 31 (an example of an authentication unit and a registration unit) is implemented by using, for example, a central processing unit (hereinafter, referred to as a "CPU") or a field programmable gate array (hereinafter, referred to as an "FPGA"), and performs various processing and controls in cooperation with the memory 32. Specifically, the control unit 31 implements functions of the authentication device P1 by referring to the program and data stored in the memory 32 and executing the program.

The control unit 31 performs image analysis processing on the first captured image captured by the first camera 10 to detect the face of the user shown in the first captured image. The control unit 31 generates a face image by cutting out a region including the detected face of the user from the first captured image. The control unit 31 outputs the generated face image to the communication unit 30 and transmits the face image to the face authentication server S1.

The control unit 31 determines whether the user shown in the face image (the first captured image) is a registered user registered in the registered face image database DB1 in advance based on whether a face authentication score transmitted from the face authentication server S1 is equal to or greater than a first threshold value.

When it is determined that the face authentication score is equal to or greater than the first threshold value, the control unit 31 determines whether the new authentication data of the user is necessary. When it is determined that registration of the new authentication data is necessary, the control unit 31 proceeds to acquisition processing of the new authentication data (here, a fingerprint image), generates a control command for imaging a finger of the user, and transmits the control command to the second imaging device C2. On the other hand, when it is determined that registration of the new authentication data is not necessary, the control unit 31 proceeds to authentication processing using other authentication data (here, a fingerprint image) that has been registered and is other than the face image, generates a control command for imaging the finger of the user, and transmits the control command to the second imaging device C2.

In the acquisition processing of the new authentication data, the control unit 31 detects a first joint of at least one finger of the user from the second captured image transmitted from the second camera 11. The control unit 31 generates the fingerprint image by cutting out a region including the first joint of the detected finger from the second captured image, and calculates a quality score indicating likelihood that the fingerprint image is suitable for fingerprint authentication. When it is determined that the calculated quality score is equal to or greater than a second threshold value, the control unit 31 transmits a user ID specified by face authentication and the generated fingerprint image to the fingerprint authentication server S2 in association with each other and causes the fingerprint authentication server S2 to register the user ID and the fingerprint image.

When it is determined that the calculated quality score is not equal to or greater than the second threshold value, the control unit 31 repeatedly performs re-imaging of the second captured image, calculation of the quality score, and registration possibility determination of the fingerprint image based on the quality score. When it is determined that the authentication using the second captured image is performed a predetermined number of times (for example, three times, five times, or the like) or more, the control unit 31 determines that it is difficult to acquire a fingerprint image suitable for fingerprint authentication, and determines that the fingerprint registration has failed. The control unit 31 generates a registration failure screen (not illustrated) for notifying the user that the fingerprint registration has failed, and outputs the registration failure screen to the display 33.

The memory 32 includes, for example, a random access memory (hereinafter, referred to as a "RAM") as a work memory used when each processing of the control unit 31 is performed, and a read only memory (hereinafter, referred to as a "ROM") that stores a program and data defining an operation of the control unit 31. The RAM temporarily stores data or information generated or acquired by the control unit 31. The program that defines the operation of the control unit 31 is written into the ROM.

The display 33 may be implemented using a display device such as a liquid crystal display (hereinafter, referred to as "LCD") or an organic electroluminescence (hereinafter, referred to as "EL"). The display 33 displays (outputs) the registration failure screen (not illustrated) output from the control unit 31.

The face authentication server S1 transmits the face authentication score of the user shown in the face image (the first captured image) transmitted from the authentication device P1 and the user ID of the user corresponding to the face authentication score to the authentication device P1 in association with each other. The face authentication server S1 includes the communication unit 40, a control unit 41, a memory 42, and the registered face image database DB1. The registered face image database DB1 may be configured as a separate body and may be communicably connected to the face authentication server S1.

The communication unit 40 is connected to the authentication device P1 so as to be able to perform wireless communication or wired communication, and transmits and receives data. The communication unit 40 acquires data of the face image (the first captured image) transmitted from the authentication device P1 and outputs the data to the control unit 41. The communication unit 40 transmits information of the face authentication score output from the control unit 41 and the user ID of the user corresponding to the face authentication score to the authentication device P1 in association with each other.

The control unit 41 is implemented by using, for example, a CPU or an FPGA, and performs various processing and controls in cooperation with the memory 42. Specifically, the control unit 41 implements functions of the face authentication server S1 by referring to the program and data stored in the memory 42 and executing the program.

The control unit 41 collates the acquired face image with the registered face image of each of at least one user registered in the registered face image database DB1 in advance, and calculates (evaluates) the face authentication score which is an index indicating whether the user shown in the face image and the registered user are the same person. The control unit 41 extracts the user ID associated with the registered face image of the user having the highest calculated face authentication score. The control unit 41 outputs the extracted user ID and the information of the face authentication score to the communication unit 40 in association with each other, and causes the communication unit 40 to transmit the information to the authentication device P1.

The memory 42 includes, for example, a RAM as a work memory used when each processing of the control unit 41 is performed, and a ROM that stores a program and data defining an operation of the control unit 41. The RAM temporarily stores data or information generated or acquired by the control unit 41. The program that defines the operation of the control unit 41 is written into the ROM.

The registered face image database DB1 is a so-called storage, and is implemented by a storage medium such as a flash memory, a hard disk drive (hereinafter, referred to as "HDD"), or a solid state drive (hereinafter, referred to as "SSD"). The registered face image database DB1 stores (registers) a registered face image of the user and information on the user such as the user ID in association with each other. The information on the user is not limited to the user ID, and may be, for example, a name, date of birth, age, gender, address, or telephone number of the user.

The fingerprint authentication server S2 transmits the fingerprint authentication score of the fingerprint shown in the fingerprint image (the second captured image) transmitted from the authentication device P1 to the authentication device P1. The fingerprint authentication server S2 includes the communication unit 50, a control unit 51, a memory 52, and the registered fingerprint image database DB2. The registered fingerprint image database DB2 may be configured as a separate body and may be communicably connected to the fingerprint authentication server S2.

The communication unit 50 is connected to the authentication device P1 so as to be able to perform wireless communication or wired communication, and transmits and receives data. The communication unit 50 acquires data of the fingerprint image (the first captured image) transmitted from the authentication device P1 and outputs the data to the control unit 51. The communication unit 50 transmits the information of the fingerprint authentication score output from the control unit 51 and the user ID of the user corresponding to the fingerprint authentication score to the authentication device P1 in association with each other.

The control unit 51 is implemented by using, for example, a CPU or an FPGA, and performs various processing and controls in cooperation with the memory 52. Specifically, the control unit 51 implements functions of the fingerprint authentication server S2 by referring to the program and data stored in the memory 52 and executing the program.

The control unit 51 collates the acquired fingerprint image with the registered fingerprint image of at least one user registered in the registered fingerprint image database DB2 in advance, and calculates (evaluates) a fingerprint authentication score which is an index indicating whether the fingerprint shown in the fingerprint image and the fingerprint of the registered fingerprint image belong to the same person. The control unit 51 outputs the calculated fingerprint authentication score to the communication unit 50 and causes the communication unit 50 to transmit the fingerprint authentication score to the authentication device P1.

The memory 52 includes, for example, a RAM as a work memory used when each processing of the control unit 51 is performed, and a ROM that stores a program and data defining an operation of the control unit 51. The RAM temporarily stores data or information generated or acquired by the control unit 51. The program that defines the operation of the control unit 51 is written into the ROM.

The registered fingerprint image database DB2 is a so-called storage, and is implemented by a storage medium such as a flash memory, an HDD, or an SSD. The registered fingerprint image database DB2 stores (registers) a registered fingerprint image of the user and information on the user such as the user ID in association with each other. The information on the user is not limited to the user ID, and may be, for example, a name, date of birth, age, gender, address, or telephone number of the user.

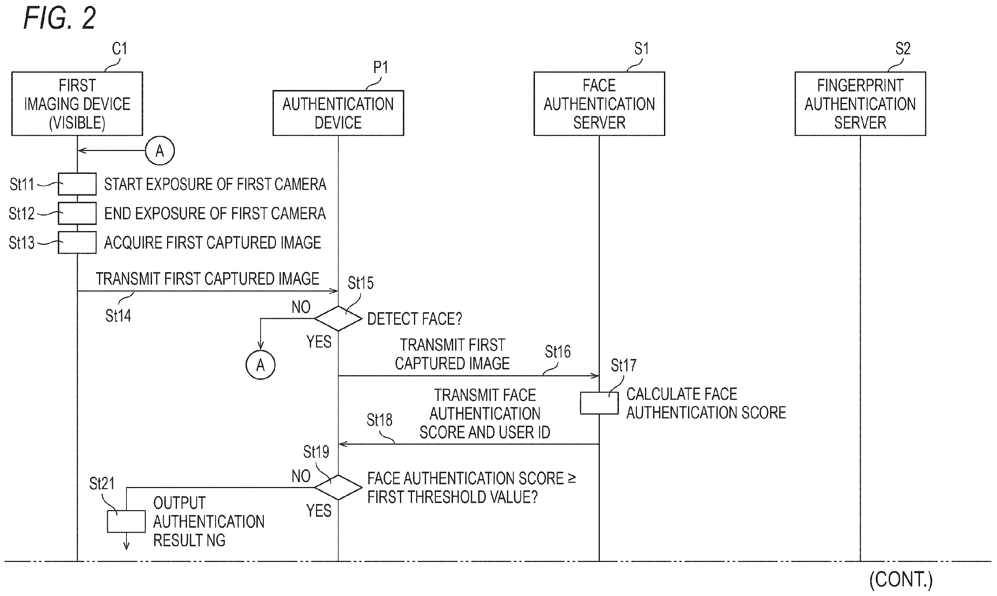

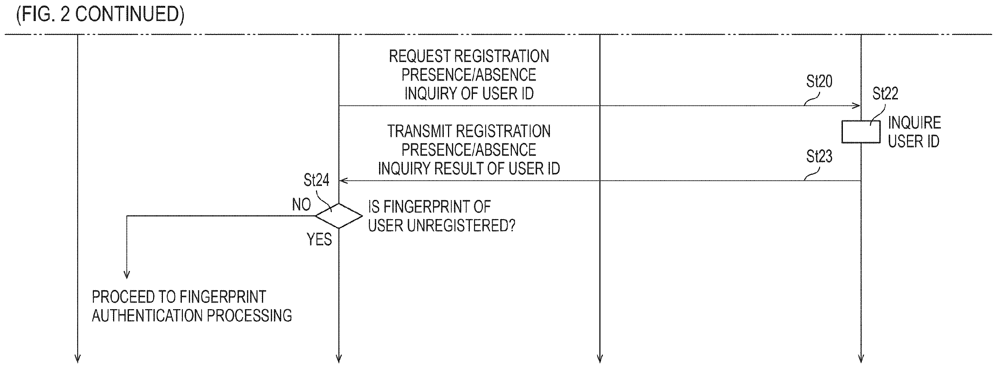

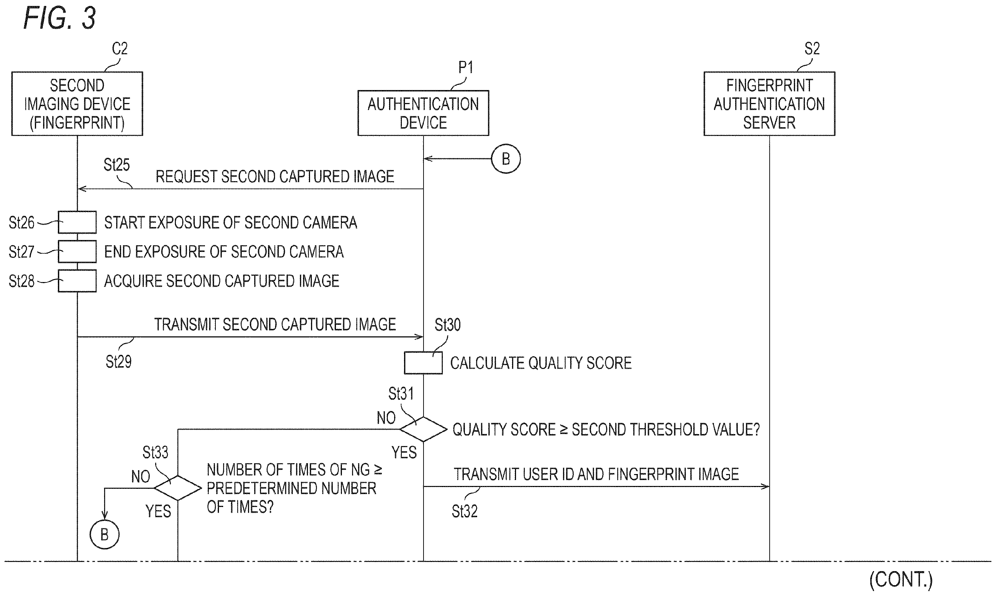

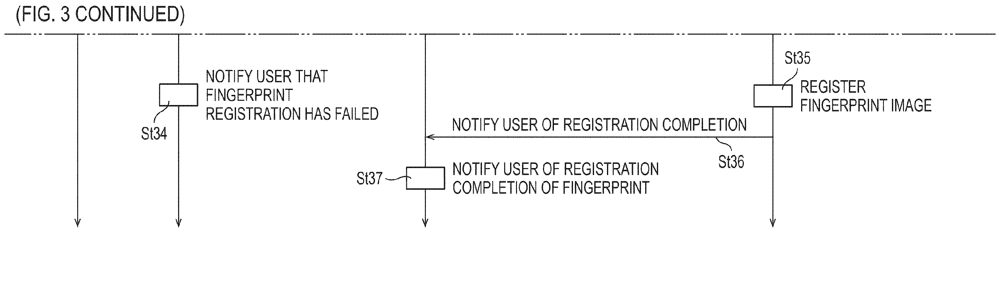

Next, an authentication operation performed by the authentication system 100 will be described with reference to FIGS. 2 and 3. FIG. 2 is a sequence diagram illustrating an operational procedure example of the authentication system 100 according to the first embodiment. FIG. 3 is a sequence diagram illustrating an operational procedure example of the authentication system 100 according to the first embodiment. Note that processing of step St17 may be performed by the authentication device P1.

The first imaging device C1 starts exposure of the first camera 10 based on the control command instructing start of imaging transmitted from the authentication device P1 (St11), and ends the exposure after a predetermined exposure time elapses (St12).

The first imaging device C1 acquires the first captured image obtaining by capturing an image of the user after the exposure (imaging) ends (St13). The first imaging device C1 transmits data of the first captured image to the authentication device P1 (St14).

The authentication device P1 performs image analysis processing on the first captured image transmitted from the first imaging device C1 to detect the face of the user. The authentication device P1 determines whether the face of the user is detected from the first captured image (St15).

When it is determined in the processing of step St15 that the face of the user is detected from the first captured image (St15, YES), the authentication device P1 generates a face image obtained by cutting out a region in which the face of the user appears from the first captured image, and transmits the face image to the face authentication server S1 (St16).

On the other hand, when it is determined in the processing of step St15 that the face of the user is not detected from the first captured image (St15, NO), the authentication device P1 returns to the processing of step St11 and re-images the face of the user.

The face authentication server S1 collates the face image transmitted from the authentication device P1 with the registered face image of each of the plurality of users registered in the registered face image database DB1 to calculate the face authentication score (St17). The face authentication server S1 extracts the user ID associated with the registered face image of the user having the highest calculated face authentication score, and transmits the extracted user ID and the information of the face authentication score in association with each other to the authentication device P1 (St18).

The authentication device P1 acquires the face authentication score and the user ID transmitted from the face authentication server S1, and determines whether the face authentication score is equal to or greater than the first threshold value (St19).

When it is determined in the processing of step St19 that the face authentication score transmitted from the face authentication server S1 is equal to or greater than the first threshold value (St19, YES), the authentication device P1 generates a control command for requesting an inquiry as to whether the user ID of the user corresponding to the face image has been registered in the registered fingerprint image database DB2, and transmits the generated control command and the user ID to the fingerprint authentication server S2 in association with each other (St20).

On the other hand, when it is determined in the processing of step St19 that the face authentication score is not equal to or greater than the first threshold value (St19, NO), the authentication device P1 determines that the authentication is "NG" (that is, failed), generates an authentication failure screen (not illustrated) for notifying the user that the authentication has failed, and outputs (displays) the authentication failure screen to the display 33 (St21).

The fingerprint authentication server S2 inquires the user ID of at least one user registered in the registered fingerprint image database DB2 and the user ID transmitted from the authentication device P1 based on the control command transmitted from the authentication device P1 (St22). The fingerprint authentication server S2 generates an inquiry result (a registration presence/absence inquiry result) as to whether the user ID transmitted from the authentication device P1 is the user ID registered in the registered fingerprint image database DB2, and transmits the inquiry result to the authentication device P1 (St23).

The authentication device P1 determines whether the fingerprint image of the user is unregistered in the registered fingerprint image database DB2 based on the inquiry result transmitted from the fingerprint authentication server S2 (St24).

When it is determined in the processing of step St24 that the fingerprint image of the user is unregistered in the registered fingerprint image database DB2 (St24, YES), the authentication device P1 proceeds to the acquisition processing of a fingerprint image, which is the new authentication data.

On the other hand, when it is determined in the processing of step St24 that the fingerprint image of the user is not unregistered in the registered fingerprint image database DB2 (St24, NO), the authentication device P1 proceeds to the fingerprint authentication processing using the fingerprint image registered in the registered fingerprint image database DB2. Note that the fingerprint authentication processing to be performed below is performed by a known method, and thus description thereof will be omitted.

The authentication device P1 generates a control command for imaging the user and transmits the generated control command to the second imaging device C2 (St25).

The second imaging device C2 starts exposure of the second camera 11 (St26), and ends the exposure after the predetermined exposure time elapses (St27). After the exposure (imaging) ends, the second imaging device C2 acquires the captured image obtained by capturing the image of the user (St28) and transmits the captured image to the authentication device P1 (St29).

The authentication device P1 detects at least one fingertip from the second captured image transmitted from the second imaging device C2, and cuts out a region including a first joint of the detected fingertip to generate the fingerprint image. The authentication device P1 calculates the quality score indicating the likelihood that the generated fingerprint image is a fingerprint image suitable for fingerprint authentication (St30), and determines whether the calculated quality score is equal to or greater than the second threshold value (St31).

When it is determined in the processing of step St31 that the calculated quality score is equal to or greater than the second threshold value (St31, YES), the authentication device P1 transmits the user ID transmitted from the face authentication server S1 and the generated fingerprint image to the fingerprint authentication server S2 in association with each other (St32).

On the other hand, when it is determined in the processing of step St31 that the calculated quality score is not equal to or greater than the second threshold value (St31, NO), the authentication device P1 further determines whether the number of times of NG in which it is determined that the calculated quality score is not equal to or greater than the second threshold value is equal to or greater than a predetermined number of times (for example, three times, five times, or the like) (St33).

When it is determined in the processing of step St33 that the number of NG times is equal to or greater than the predetermined number of times (St33, YES), the authentication device P1 determines that the fingerprint registration has failed. The authentication device P1 generates a fingerprint registration failure screen (not illustrated) for notifying the user that the registration of the fingerprint image has failed, and outputs (notifies) the fingerprint registration failure screen to the display 33 (St34).

On the other hand, when it is determined in the processing of step St33 that the number of NG times is not equal to or greater than the predetermined number of times (St33, NO), the authentication device P1 returns to step St25.

The fingerprint authentication server S2 registers (stores) the fingerprint image transmitted from the authentication device P1 and the user ID in the registered fingerprint image database DB2 in association with each other (St35). After registering the fingerprint image in the registered fingerprint image database DB2, the fingerprint authentication server S2 generates a registration completion notification of the fingerprint image and transmits the registration completion notification to the authentication device P1 (St36).

Based on the registration completion notification of the fingerprint image transmitted from the fingerprint authentication server S2, the authentication device P1 generates a registration completion notification screen (not illustrated) for notifying the user of the registration completion of the fingerprint image, and outputs (notifies) the registration completion notification screen to the display 33 (St37).

The acquisition processing of the first captured image in steps St11 to St14 and the acquisition processing of the second captured image in steps St25 to St29 described above may be performed continuously or in parallel.

As described above, when the user authentication using the biometric information is successful, the authentication system 100 according to the first embodiment can acquire and register the new authentication data (here, the fingerprint image) of an authenticated user. Thus, the authentication system 100 enables multi-modal authentication in the next and subsequent user authentication. In addition, the authentication system 100 enables authentication or multi-modal authentication suitable for any service available to the user (for example, deposit, shopping, entry into and exit from a workplace building, or the like).

When the user authentication based on the registered authentication data (here, the face image) is successful, the authentication system 100 according to the first embodiment performs the acquisition and registration of the unregistered authentication data (here, the fingerprint image), so that it is possible to effectively prevent impersonation by another person, and it is possible to improve reliability of the authentication data registered in each server even when the servers managing the authentication data are different.

### (Second Embodiment)

An example has been described in which the authentication system 100 according to the first embodiment acquires and registers the biometric information (the fingerprint image) as new authentication data. An example in which the authentication system 100A according to the second embodiment acquires and registers the storage information (the personal identification number) as the new authentication data will be described.

The authentication system 100A according to the second embodiment partially has the same configuration as the authentication system 100 according to the first embodiment. In the following description of the authentication system 100A according to the second embodiment, the same components as those of the authentication system 100 according to the first embodiment are denoted by the same reference numerals, and description thereof will be omitted.

In the following description of the second embodiment, the example in which the personal identification number is acquired and registered as an example of the storage information will be described, but it is needless to say that the storage information is not limited thereto.

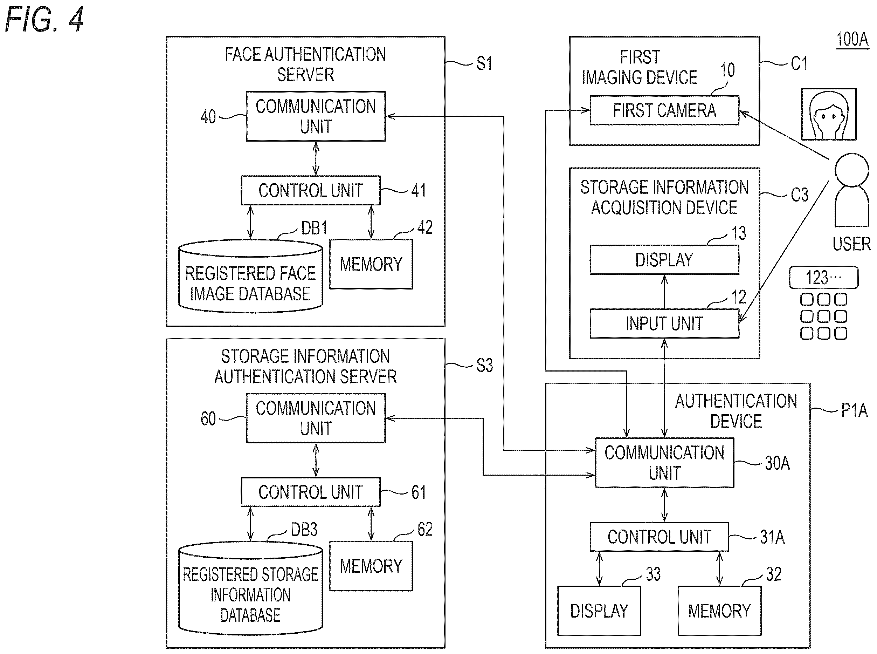

The authentication system 100A (an example of the authentication information registration system) according to the second embodiment will be described with reference to FIG. 4. FIG. 4 is a block diagram illustrating an internal configuration example of the authentication system 100C according to the second embodiment. The storage information acquisition device C3 and the storage information authentication server S3 are connected to each other so as to be able to communicate data with each other, but illustration thereof will be omitted in FIG. 4.

The authentication system 100A includes the first imaging device C1 (the example of the first authentication information acquisition device), a storage information acquisition device C3 (an example of the second authentication information acquisition device), an authentication device P1A (an example of the registration device), the face authentication server S1, and a storage information authentication server S3 (an example of the storage device). The face authentication server S1 and the storage information authentication server S3 may be realized by one device.

The storage information acquisition device C3 is a device capable of receiving an input operation of storage information by a user, and is connected to the authentication device P1A and the storage information authentication server S3 so as to be able to perform data communication therebetween. The storage information acquisition device C3 includes an input unit 12 and a display 13.

The input unit 12 is realized by a user interface such as a keyboard, a touch panel, or a mouse, and receives an input operation of the storage information (for example, the personal identification number) by the user. The input unit 12 converts the content of the received storage information into an electric signal, transmits the electric signal to the storage information authentication server S3, generates a screen indicating the content of the storage information, and outputs and displays the screen on the display 13.

The display 13 may be formed using a display device such as an LCD or an organic EL. The display 13 displays (outputs) a screen capable of receiving an input of the storage information, a screen indicating the content of the storage information output from the input unit 12, and the like.

The authentication device P1A performs the user authentication based on the first captured image transmitted from the first imaging device C1, the registration of the storage information transmitted from the storage information acquisition device C3, or the user authentication based on the storage information transmitted from the storage information acquisition device C3. The authentication device P1A includes a communication unit 30A, a control unit 31A, the memory 32, and the display 33.

The communication unit 30A (an example of the acquisition unit) is connected to the first camera 10 of the first imaging device C1, the input unit 12 of the storage information acquisition device C3, the communication unit 40 of the face authentication server S1, and a communication unit 60 of the storage information authentication server S3 so as to be able to perform wireless communication or wired communication, and transmits and receives data.

The control unit 31A (an example of the authentication unit and the registration unit) is implemented by using, for example, a CPU or an FPGA, and performs various processing and controls in cooperation with the memory 32. Specifically, the control unit 31A implements functions of the authentication device P1A by referring to the program and data stored in the memory 32 and executing the program.

When it is determined that the user shown in the face image (the first captured image) is a registered user registered in advance in the registered face image database DB1 and it is determined that registration of the new authentication data of the user is necessary, the control unit 31A proceeds to the acquisition processing of the new authentication data (here, the storage information). The control unit 31A generates a control command for requesting acquisition of the storage information and transmits the control command to the storage information acquisition device C3. On the other hand, when it is determined that the registration of the new authentication data is not necessary, the control unit 31A proceeds to storage information authentication processing using the registered storage information.

The storage information authentication server S3 newly registers the storage information transmitted from the storage information acquisition device C3 and performs the user authentication based on the storage information transmitted from the authentication device P1A. The storage information authentication server S3 includes the communication unit 60, a control unit 61, a memory 62, and a registered storage information database DB3.

The communication unit 60 is connected between the storage information acquisition device C3 and the authentication device P1A so as to be able to perform wireless communication or wired communication, and transmits and receives data.

The control unit 61 is implemented by using, for example, a CPU or an FPGA, and performs various processing and controls in cooperation with the memory 62. Specifically, the control unit 61 implements functions of the storage information authentication server S3 by referring to the program and data stored in the memory 62 and executing the program.

The control unit 61 registers the storage information transmitted from the storage information acquisition device C3 or performs the user authentication using the storage information. The control unit 61 transmits a registration result of the storage information or a user authentication result to the authentication device P1A.

The memory 62 includes, for example, a RAM as a work memory used when each processing of the control unit 61 is performed, and a ROM that stores a program and data defining an operation of the control unit 61. The RAM temporarily stores data or information generated or acquired by the control unit 61. The program that defines the operation of the control unit 61 is written into the ROM.

The registered storage information database DB3 is a so-called storage, and is implemented by a storage medium such as a flash memory, an HDD, or an SSD. The registered storage information database DB3 stores (registers) the storage information of the user and information on the user such as the user ID in association with each other.

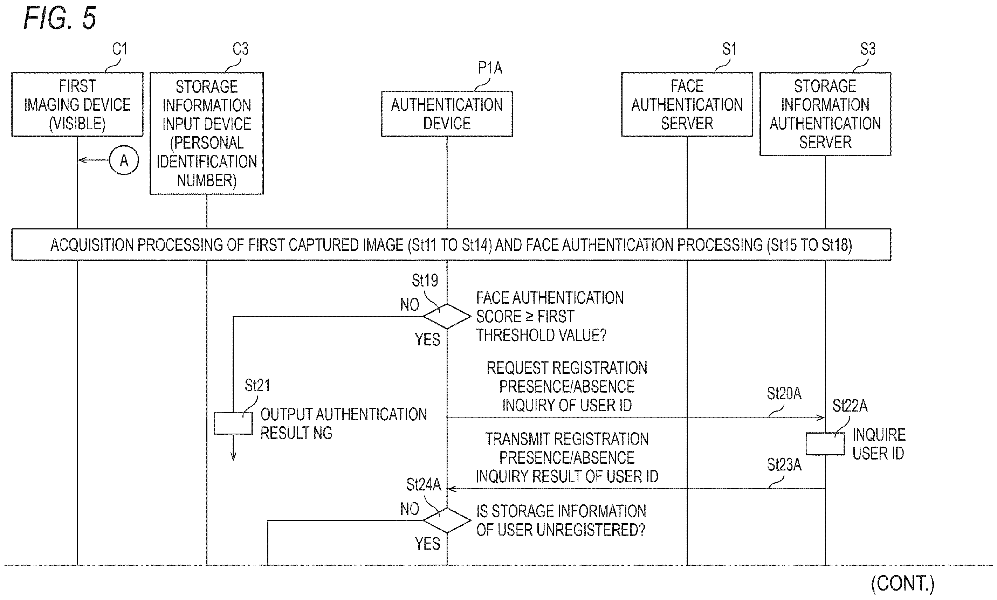

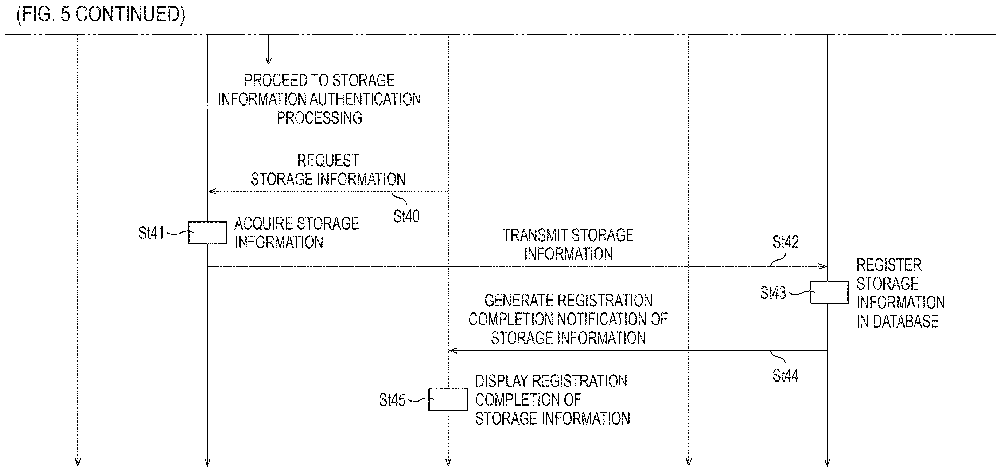

Next, an authentication operation performed by the authentication system 100A will be described with reference to FIG. 5. FIG. 5 is a sequence diagram illustrating an operational procedure example of the authentication system 100A according to the second embodiment. Since each of steps St11 to St18 illustrated in FIG. 5 is the same processing as each of steps St11 to St18 described in FIGS. 2 and 3, the description thereof will be omitted here.

The authentication device P1A acquires the face authentication score and the user ID transmitted from the face authentication server S1, and determines whether the face authentication score is equal to or greater than the first threshold value (St19).

When it is determined in the processing of step St19 that the face authentication score transmitted from the face authentication server S1 is equal to or greater than the first threshold value (St19, YES), the authentication device P1A generates a control command for requesting an inquiry as to whether the user ID of the user corresponding to the face image has been registered in the registered storage information database DB3, and transmits the generated control command and the user ID to the storage information authentication server S3 in association with each other (St20A).

On the other hand, when it is determined in the processing of step St19 that the face authentication score is not equal to or greater than the first threshold value (St19, NO), the authentication device P1A generates an authentication failure screen (not illustrated) for notifying the user that the authentication has failed, and outputs (displays) the authentication failure screen to the display 33 (St21).

The storage information authentication server S3 inquires the user ID of at least one user registered in the registered storage information database DB3 and the user ID transmitted from the authentication device P1A based on the control command transmitted from the authentication device P1A (St22A). The storage information authentication server S3 generates an inquiry result (the registration presence/absence inquiry result) as to whether the user ID transmitted from the authentication device P1A is the user ID registered in the registered storage information database DB3, and transmits the inquiry result to the authentication device P1A (St23A).

The authentication device P1A determines whether the storage information of the user is unregistered in the registered storage information database DB3 based on the inquiry result transmitted from the storage information authentication server S3 (St24A).

When it is determined in the processing of step St24A that the storage information of the user is unregistered in the registered storage information database DB3 (St24A, YES), the authentication device P1A proceeds to the acquisition processing of the storage information, which is the new authentication data.

On the other hand, when it is determined in the processing of step St24A that the storage information of the user is not unregistered in the registered storage information database DB3 (St24A, NO), the authentication device P1A proceeds to the storage information authentication processing using the storage information registered in the registered storage information database DB3. Note that the storage information authentication processing to be performed below is performed by a known method, and thus description thereof will be omitted.

The authentication device P1A generates a control command for acquiring the storage information of the user and transmits the generated control command to the storage information acquisition device C3 (St40).

The storage information acquisition device C3 acquires the storage information of the user by receiving the input of the storage information by the user operation (St41). The storage information acquisition device C3 transmits the acquired storage information to the storage information authentication server S3 (St42).

The storage information authentication server S3 registers (stores) the storage information transmitted from the storage information acquisition device C3 and the user ID transmitted by the authentication device P1A in association with each other in the registered storage information database DB3 (St43). The storage information authentication server S3 generates a registration completion notification of the storage information and transmits the registration completion notification to the authentication device P1A (St44).

Based on the registration completion notification of the storage information transmitted from the storage information authentication server S3, the authentication device P1A generates a registration completion notification screen (not illustrated) for notifying the user of the registration completion of the storage information, and outputs (notifies) the registration completion notification screen to the display 33 (St45).

The acquisition processing of the first captured image in steps St11 to St14 and the acquisition processing of the storage information in steps St40 to St42 described above may be performed continuously or in parallel.

As described above, when the user authentication using the biometric information is successful, the authentication system 100A according to the second embodiment can acquire and register the new authentication data (here, the storage information) of the authenticated user.

### (Third Embodiment)

The example has been described in which the authentication system 100 according to the first embodiment acquires and registers the biometric information (the fingerprint image) as the new authentication data. An example in which the authentication system 100B according to the third embodiment acquires and registers the possession information (the personal identification number) as the new authentication data will be described.

The authentication system 100B according to the third embodiment partially has the same configuration as the authentication system 100 according to the first embodiment. In the following description of the authentication system 100B according to the third embodiment, the same components as those of the authentication system 100 according to the first embodiment are denoted by the same reference numerals, and description thereof will be omitted.

In the following description of the third embodiment, the example in which a card ID is acquired and registered as an example of the possession information will be described, but it is needless to say that the possession information is not limited thereto.

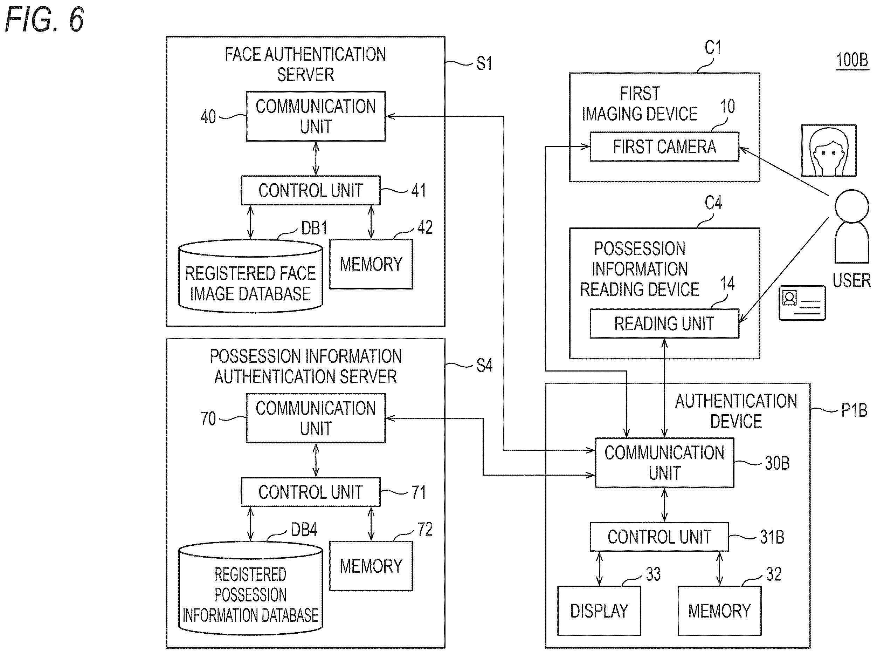

The authentication system 100B (an example of the authentication information registration system) according to the third embodiment will be described with reference to FIG. 6. FIG. 6 is a block diagram illustrating an internal configuration example of the authentication system 100B according to the third embodiment. A possession information reading device C4 and a possession information authentication server S4 are connected to each other so as to be able to communicate data with each other, but illustration thereof will be omitted in FIG. 6.

The authentication system 100B includes the first imaging device C1 (the example of the first authentication information acquisition device), the possession information reading device C4 (an example of the second authentication information acquisition device), an authentication device P1B (an example of the registration device), the face authentication server S1, and a possession information authentication server S4 (an example of the storage device). The face authentication server S1 and the possession information authentication server S4 may be realized by one device.

The possession information reading device C4 is, for example, a device capable of reading the possession information related to a possession (for example, an ID card or the like) possessed only by the user, and is connected to the authentication device P1B and the possession information authentication server S4 so as to be able to perform data communication therebetween. The possession information reading device C4 includes a reading unit 14.

The reading unit 14 reads the possession information on the possession. The reading unit 14 may be capable of receive an input of the possession information by an input operation by the user. The reading unit 14 transmits the read possession information to the authentication device P1B.

The authentication device P1B performs the user authentication based on the first captured image transmitted from the first imaging device C1, the registration of the possession information transmitted from the possession information reading device C4, or the user authentication based on the possession information transmitted from the possession information reading device C4. The authentication device P1B includes a communication unit 30B, a control unit 31B, the memory 32, and the display 33.

The communication unit 30B (an example of the acquisition unit) is connected to the first camera 10 of the first imaging device C1, the reading unit 14 of the possession information reading device C4, the communication unit 40 of the face authentication server S1, and the communication unit 70 of the possession information authentication server S4 so as to be able to perform wireless communication or wired communication, and transmits and receives data.

The control unit 31B (an example of the authentication unit and the registration unit) is implemented by using, for example, a CPU or an FPGA, and performs various processing and controls in cooperation with the memory 32. Specifically, the control unit 31B implements functions of the authentication device P1B by referring to the program and data stored in the memory 32 and executing the program.

When it is determined that the user shown in the face image (the first captured image) is a registered user registered in advance in the registered face image database DB1 and it is determined that registration of the new authentication data of the user is necessary, the control unit 31B proceeds to the acquisition processing of the new authentication data (here, the possession information). The control unit 31B generates a control command for requesting acquisition of the possession information and transmits the control command to the possession information reading device C4. On the other hand, when it is determined that the registration of the new authentication data is not necessary, the control unit 31B proceeds to the possession information authentication processing using the registered possession information.

The possession information authentication server S4 newly registers the possession information transmitted from the possession information reading device C4, and performs the user authentication based on the possession information transmitted from the authentication device P1B. The possession information authentication server S4 includes the communication unit 70, a control unit 71, a memory 72, and a registered possession information database DB4.

The communication unit 70 is connected between the possession information reading device C4 and the authentication device P1B so as to be able to perform wireless communication or wired communication, and transmits and receives data.

The control unit 71 is implemented by using, for example, a CPU or an FPGA, and performs various processing and controls in cooperation with the memory 72. Specifically, the control unit 71 implements functions of the possession information authentication server S4 by referring to the program and data stored in the memory 72 and executing the program.

The control unit 71 registers the possession information transmitted from the possession information reading device C4 or performs the user authentication using the possession information. The control unit 71 transmits a registration result of the possession information or the user authentication result to the authentication device P1B.

The memory 72 includes, for example, a RAM as a work memory used when each processing of the control unit 71 is performed, and a ROM that stores a program and data defining an operation of the control unit 71. The RAM temporarily stores data or information generated or acquired by the control unit 71. The program that defines the operation of the control unit 71 is written into the ROM.

The registered possession information database DB4 is a so-called storage, and is implemented by a storage medium such as a flash memory, an HDD, or an SSD. The registered possession information database DB4 stores (registers) the possession information of the user and the information on the user such as the user ID in association with each other.

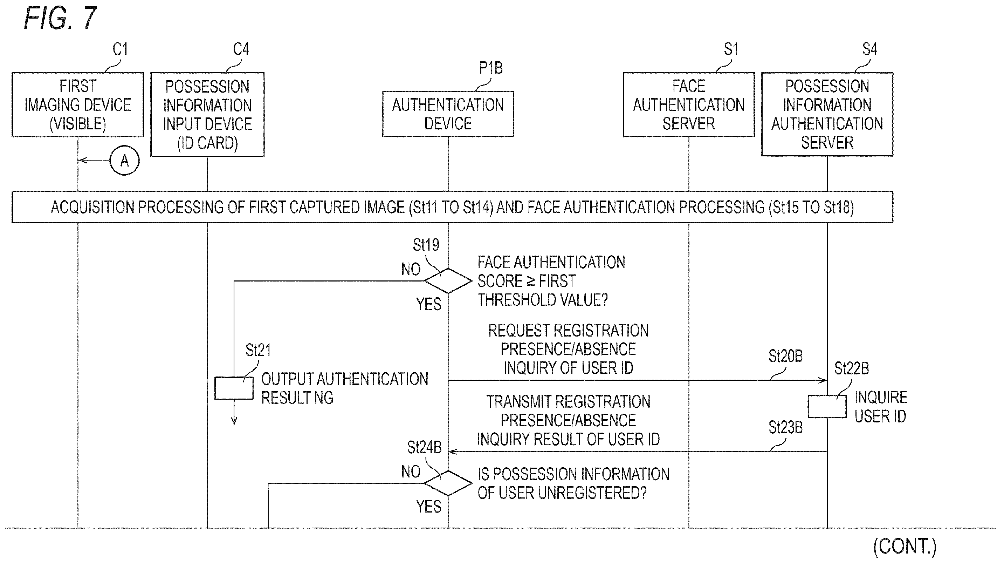

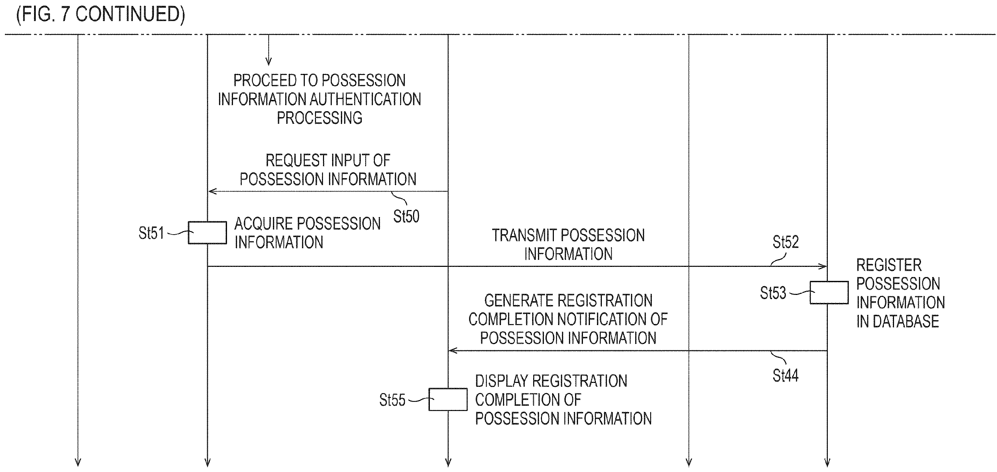

Next, an authentication operation performed by the authentication system 100B will be described with reference to FIG. 7. FIG. 7 is a sequence diagram illustrating an operational procedure example of the authentication system 100B according to the third embodiment. Since each of steps St11 to St18 illustrated in FIG. 7 is the same processing as each of steps St11 to St18 described in FIGS. 2 and 3, the description thereof will be omitted here.

The authentication device P1B acquires the face authentication score and the user ID transmitted from the face authentication server S1, and determines whether the face authentication score is equal to or greater than the first threshold value (St19).

When it is determined in the processing of step St19 that the face authentication score transmitted from the face authentication server S1 is equal to or greater than the first threshold value (St19, YES), the authentication device P1B generates a control command for requesting an inquiry as to whether the user ID of the user corresponding to the face image has been registered in the registered possession information database DB4, and transmits the generated control command and the user ID to the possession information authentication server S4 in association with each other (St20B).

On the other hand, when it is determined in the processing of step St19 that the face authentication score is not equal to or greater than the first threshold value (St19, NO), the authentication device P1B generates an authentication failure screen (not illustrated) for notifying the user that the authentication has failed, and outputs (displays) the authentication failure screen to the display 33 (St21).

The possession information authentication server S4 inquires the user ID of at least one user registered in the registered possession information database DB4 and the user ID transmitted from the authentication device P1B based on the control command transmitted from the authentication device P1B (St22B). The possession information authentication server S4 generates an inquiry result (the registration presence/absence inquiry result) as to whether the user ID transmitted from the authentication device P1B is the user ID registered in the registered possession information database DB4, and transmits the inquiry result to the authentication device P1 (St23B).

The authentication device P1B determines whether the possession information of the user is unregistered in the registered possession information database DB4 based on the inquiry result transmitted from the possession information authentication server S4 (St24B).

When it is determined in the processing of step St24B that the possession information of the user is unregistered in the registered possession information database DB4 (St24B, YES), the authentication device P1B proceeds to the acquisition processing of the possession information, which is the new authentication data.

On the other hand, when it is determined in the processing of step St24B that the possession information of the user is not unregistered in the registered possession information database DB4 (St24B, NO), the authentication device P1B proceeds to the possession information authentication processing using the possession information registered in the registered possession information database DB4. Note that the possession information authentication processing to be performed below is performed by a known method, and thus description thereof will be omitted.

The authentication device P1B generates a control command for acquiring the possession information of the user, and transmits the generated control command to the possession information reading device C4 (St50).

The possession information reading device C4 acquires the possession information of the user by receiving the input of the possession information by the user operation (St51). The possession information reading device C4 transmits the acquired possession information to the possession information authentication server S4 (St52).

The possession information authentication server S4 registers (stores) the possession information transmitted from the possession information reading device C4 and the user ID transmitted by the authentication device P1B in association with each other in the registered possession information database DB4 (St53). The possession information authentication server S4 generates a registration completion notification of the possession information and transmits the registration completion notification to the authentication device P1B (St54).

Based on the registration completion notification of the possession information transmitted from the possession information authentication server S4, the authentication device P1B generates a registration completion notification screen (not illustrated) for notifying the user of the registration completion of the possession information, and outputs (notifies) the registration completion notification screen to the display 33 (St55).

The acquisition processing of the first captured image in steps St11 to St14 and the acquisition processing of the possession information in steps St50 to St52 described above may be performed continuously or in parallel.

As described above, when the user authentication using the biometric information is successful, the authentication system 100B according to the third embodiment can acquire and register the new authentication data (here, the possession information) of the authenticated user.

### (Fourth Embodiment)

In the authentication system 100 according to the first embodiment, the example has been described in which the authentication data is managed by one server (here, the face authentication server S1), and when only predetermined biometric information that can be used for user authentication is registered, the authentication data is managed by another server (here, the fingerprint authentication server S2) and new authentication data other than the predetermined biometric authentication is acquired. In the authentication system 100C according to the fourth embodiment, an example will be described in which when a plurality of pieces of authentication data are managed by one server and user authentication using any one piece of the managed authentication data is successful, the biometric information (here, an invisible face image) is acquired and registered as the new authentication data, or registered authentication data is updated.

The authentication system 100C according to the fourth embodiment partially has the same configuration as the authentication system 100 according to the first embodiment. In the following description of the authentication system 100C according to the fourth embodiment, the same components as those of the authentication system 100 according to the first embodiment are denoted by the same reference numerals, and description thereof will be omitted.

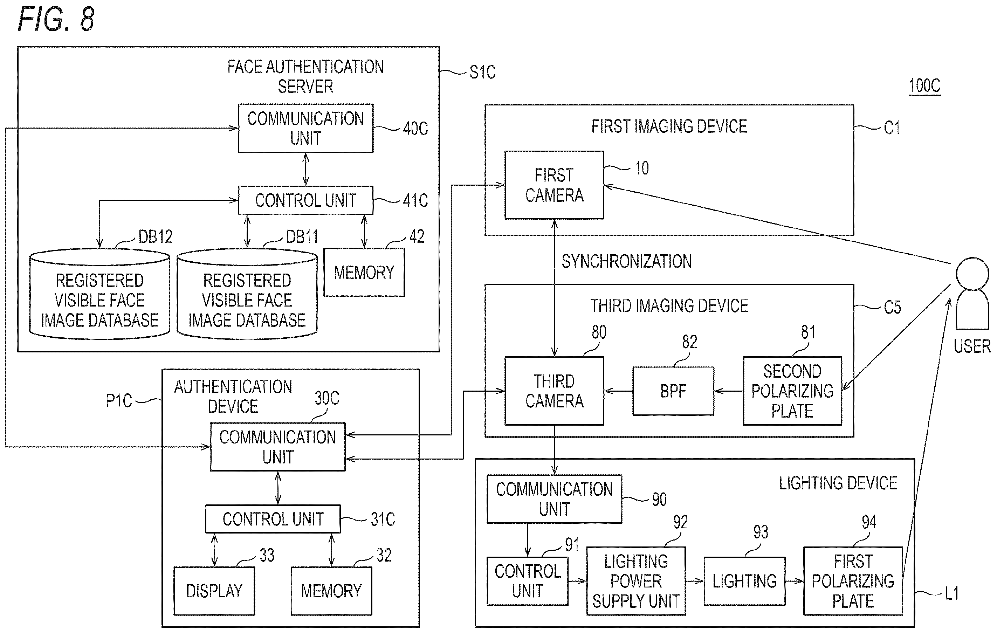

The authentication system 100C (an example of the authentication information registration system) according to the fourth embodiment will be described with reference to FIG. 8. FIG. 8 is a block diagram illustrating an internal configuration example of the authentication system 100C according to the fourth embodiment.

The authentication system 100C includes the first imaging device C1 (an example of the first authentication information acquisition device), a third imaging device C5 (an example of the second authentication information acquisition device), a lighting device L1, an authentication device P1C (an example of the registration device), a face authentication server S1C (an example of the storage device). The authentication system 100C illustrated in FIG. 8 is an example and is not limited thereto.

The third imaging device C5 is controlled by the authentication device P1C to capture an image of a region including the face of the user, and acquires a third captured image (an invisible image) of the user used for authentication. The third imaging device C5 includes a third camera 80, a second polarizing plate 81, and a band-pass filter (hereinafter, referred to as "BPF") 82.

The third camera 80 includes at least an image sensor (not illustrated) and a lens (not illustrated). The image sensor is a solid-state imaging device including a Si photodiode and, for example, a CCD or a CMOS, and converts an optical image formed on an imaging surface by invisible light (internally scattered light) through the BPF 82 into an electric signal. The third camera 80 transmits the converted data (data of the third captured image) to the authentication device P1C.

The second polarizing plate 81 is disposed orthogonal to a first polarizing plate 94 (that is, crossed Nicols), removes a component in a first direction (that is, a component of specular reflection light) of specular reflection light and internally scattered light reflected by the face of the user and other light (sunlight, illumination light which is the visible light, and the like), and transmits only a component in a second direction (that is, the invisible light) of the internally scattered light and other light.

The BPF 82 transmits only invisible light (that is, near-infrared light having a wavelength of 940 nm) among the internally scattered light transmitted through the second polarizing plate 81 and other light. Accordingly, the BPF 82 can transmit only invisible light having the wavelength of 940 nm which is within a sensor sensitivity range in which a Si photodiode (not illustrated) of the third camera 80 can receive light and in which attenuation of sunlight is large due to moisture contained in the air.

The lighting device L1 is controlled by the authentication device P1C to emit the invisible light including the near-infrared light having the wavelength of 940 nm to a user who is a face authentication target. The lighting device L1 includes the communication unit 90, the control unit 91, a lighting power supply unit 92, a lighting 93, and the first polarizing plate 94.

The communication unit 90 is connected to the third camera 80 of the third imaging device C5 so as to be able to perform data communication therebetween, and outputs a control command transmitted from the third camera 80 to the control unit 91.

The control unit 91 executes an ON/OFF control of the lighting power supply unit 92 (that is, a turning on/off control of the lighting 93) based on the control command output from the communication unit 90.

The lighting power supply unit 92 is controlled by the control unit 91 to turn on and off power supply to the lighting 93.

The lighting 93 is realized by at least one light-emitting diode (LED). The lighting 93 is supplied with electric power from the lighting power supply unit 92 and emits the invisible light, which is the near-infrared light having the wavelength of 940 nm. The lighting 93 may be a point light source or a surface light source.

The first polarizing plate 94 is disposed orthogonal to the second polarizing plate 81 (that is, crossed Nicols), and polarizes the invisible light emitted from the lighting 93 in the first direction. For example, the first polarizing plate 94 transmits only a vertical component of the invisible light of the lighting 93.

The authentication device P1C performs the user authentication based on the first captured image (the visible image) transmitted from the first imaging device C1, registration of the third captured image (the invisible image) transmitted from the third imaging device C5, the user authentication based on the third captured image (the invisible image), or update of the first captured image (the visible image). The authentication device P1C includes a communication unit 30C, a control unit 31C, the memory 32, and the display 33.

The communication unit 30C (an example of the acquisition unit) is connected to the first camera 10 of the first imaging device C1, the third camera 80 of the third imaging device C5, and a communication unit 40C of the face authentication server S1C so as to be able to perform wireless communication or wired communication,, and transmits and receives data.

The control unit 31C (an example of the authentication unit and the registration unit) is implemented by using, for example, a CPU or an FPGA, and performs various processing and controls in cooperation with the memory 32. Specifically, the control unit 31C implements functions of the authentication device P1C by referring to the program and data stored in the memory 32 and executing the program.

The control unit 31C detects the face of the user from the first captured image (the visible image) and cuts out a region in which the face of the user appears to generate a visible face image, or detects the face of the user from the third captured image (the invisible image) and cuts out a region in which the face of the user appears to generate the invisible face image.

When it is determined that the user shown in the visible face image is a registered user registered in advance in a registered visible face image database DB11 and it is determined that registration of new authentication data of the user is necessary, the control unit 31C proceeds to the acquisition processing of the new authentication data (here, the third captured image). The control unit 31C generates a control command for requesting acquisition of the third captured image and transmits the control command to the second imaging device C2.

On the other hand, when it is determined that the registration of the new authentication data of the user is not necessary, the control unit 31C determines whether the update of the visible face image registered in the registered visible face image database DB11 is necessary. When it is determined that the update of the visible face image registered in the registered visible face image database DB11 is necessary, the control unit 31C proceeds to the acquisition processing of the registered authentication data (here, the first captured image).

The face authentication server S1C calculates the face authentication score of the user shown in the visible face image or the invisible face image transmitted from the authentication device P1C, registers the invisible face image in a registered invisible face image database DB12, or updates the visible face image registered in the registered visible face image database DB11. The face authentication server S1C includes a communication unit 40C, a control unit 41C, the memory 42, the registered visible face image database DB11, and a registered invisible face image database DB12. Note that each of the registered visible face image database DB11 and the registered invisible face image database DB12 may be configured a separate body and communicably connected to the face authentication server S1C.

The communication unit 40C is connected to the authentication device P1C so as to be able to perform wireless communication or wired communication, and transmits and receives data.

The control unit 41C is implemented by using, for example, a CPU or an FPGA, and performs various processing and controls in cooperation with the memory 42. Specifically, the control unit 41C implements functions of the face authentication server S1C by referring to the program and data stored in the memory 42 and executing the program.

The control unit 41C collates the acquired visible face image with the registered visible face image of each of at least one user registered in the registered visible face image database DB11 in advance, and calculates (evaluates) the face authentication score which is an index indicating whether the user shown in the visible face image and the registered user are the same person. The control unit 41C extracts the user ID associated with the registered visible face image of the user having the highest calculated face authentication score. The control unit 41C outputs the extracted user ID and the information of the face authentication score to the communication unit 40C in association with each other, and causes the communication unit 40C to transmit the information to the authentication device P1C.

The control unit 41C registers (stores) the acquired invisible face image in the registered invisible face image database DB12, and overwrites (updates) the acquired visible face image on the registered visible face image registered in the registered visible face image database DB11.

The registered visible face image database DB11 is a so-called storage, and is implemented by a storage medium such as a flash memory, an HDD, or an SSD. The registered visible face image database DB11 stores (registers) the registered visible face image of the user and information on the user such as the user ID in association with each other.

The registered invisible face image database DB12 is a so-called storage, and is implemented by a storage medium such as a flash memory, an HDD, or an SSD. The registered invisible face image database DB12 stores (registers) the registered invisible face image of the user and the information on the user such as the user ID in association with each other.

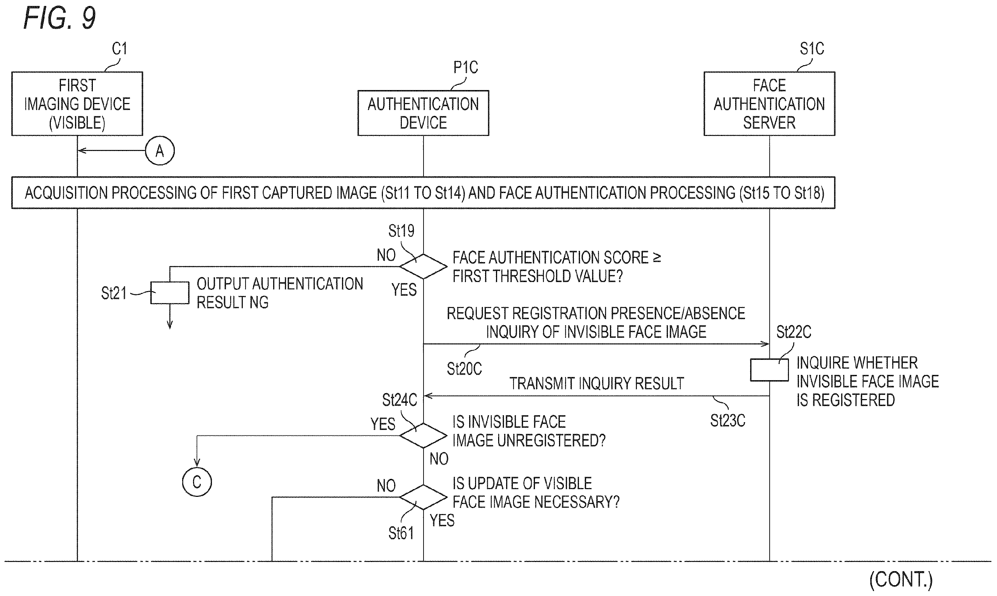

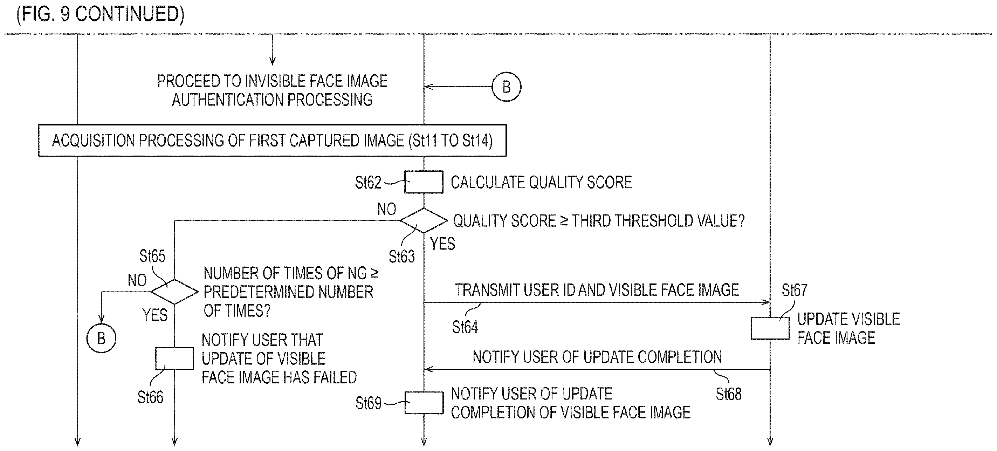

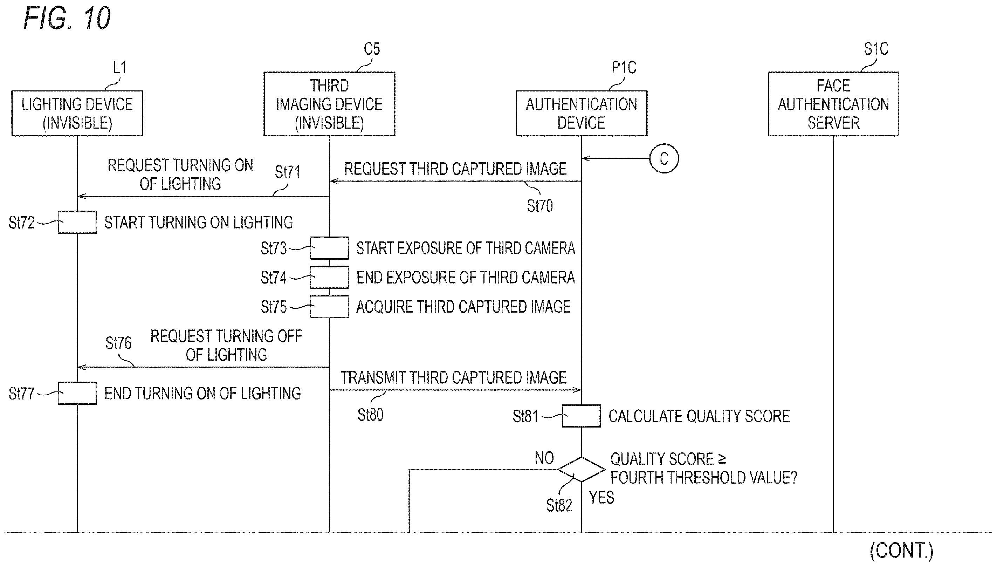

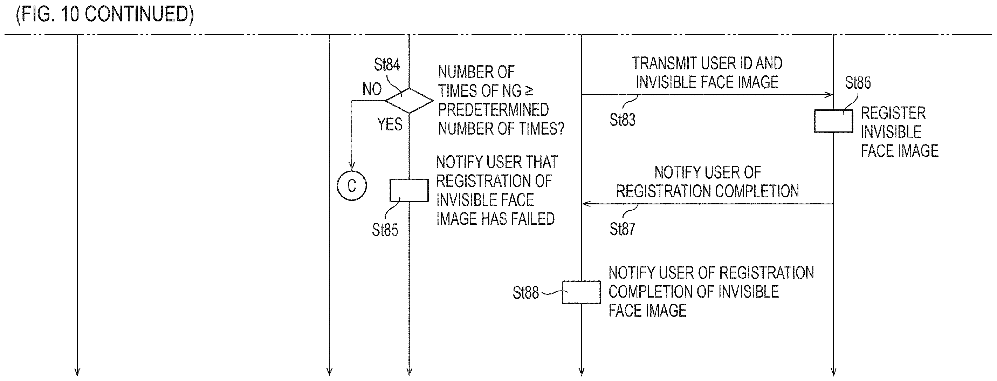

Next, an authentication operation performed by the authentication system 100C will be described with reference to FIGS. 9 and 10. FIG. 9 is a sequence diagram illustrating an operational procedure example of the authentication system 100C according to the fourth embodiment. FIG. 10 is a sequence diagram illustrating an operational procedure example of the authentication system 100C according to the fourth embodiment. Since each of steps St11 to St18 illustrated in FIGS. 9 and 10 is the same processing as each of steps St11 to St18 described in FIGS. 2 and 3, the description thereof will be omitted here.

The authentication device P1C acquires the face authentication score and the user ID transmitted from the face authentication server S1C, and determines whether the face authentication score is equal to or greater than the first threshold value (St19).

When it is determined in the processing of step St19 that the face authentication score transmitted from the face authentication server S1C is equal to or greater than the first threshold value (St19, YES), the authentication device P1C generates a control command for requesting an inquiry as to whether the invisible face image of the user has been registered in the registered invisible face image database DB12, and transmits the generated control command and the user ID to the face authentication server S1C in association with each other (St20C).

On the other hand, when it is determined in the processing of step St19 that the face authentication score is not equal to or greater than the first threshold value (St19, NO), the authentication device P1C generates an authentication failure screen (not illustrated) for notifying the user that the authentication has failed, and outputs (displays) the authentication failure screen to the display 33 (St21C).

The face authentication server S1C inquires the user ID of at least one user registered in the registered invisible face image database DB12 and the user ID transmitted from the authentication device P1C based on the control command transmitted from the authentication device P1C (St22C). The face authentication server S1C generates an inquiry result (the registration presence/absence inquiry result) as to whether the invisible face image associated with the user ID transmitted from the authentication device P1C is registered in the registered invisible face image database DB12, and transmits the inquiry result to the authentication device P1C (St23C).

The authentication device P1C determines whether the invisible face image of the user is unregistered based on the inquiry result transmitted from the face authentication server S1C (St24C).

When it is determined in the processing of step St24C that the invisible face image of the user is unregistered (St24C, YES), the authentication device P1C further determines whether the update of the visible face image of the user is necessary (St61).

On the other hand, when it is determined in the processing of step St24C that the invisible face image of the user is not unregistered (St24C, NO), the authentication device P1C proceeds to acquisition processing of the invisible face image registered in the registered invisible face image database DB12.

When it is determined in the processing of step St61 that the update of the visible face image of the user is necessary (St61, YES), the authentication device P1C generates a control command for requesting imaging of the first captured image (the visible image) and transmits the control command to the first imaging device C1. The authentication system 100C performs the processing of steps St11 to St14.

When it is determined in the processing of step St61 that the update of the visible face image of the user is not necessary (St61, NO), the authentication device P1C proceeds to invisible face image authentication processing using the invisible face image registered in the registered invisible face image database DB12. Note that the invisible face image authentication processing to be performed below is similar to the visible face image authentication processing, and thus description thereof will be omitted.

The authentication device P1C generates a visible face image obtained by cutting out the face region of the user from the first captured image (the visible image) transmitted from the first imaging device C1, calculates a quality score indicating likelihood that the generated visible face image is a visible face image suitable for face authentication using the visible image (St62), and determines whether the calculated quality score is equal to or greater than a third threshold value (St63).

When it is determined in the processing of step St63 that the calculated quality score is equal to or greater than the third threshold value (St63, YES), the authentication device P1C transmits the user ID transmitted from the face authentication server S1C and the generated visible face image to the face authentication server S1C in association with each other (St64).

On the other hand, when it is determined in the processing of step St63 that the calculated quality score is not equal to or greater than the third threshold value (St63, NO), the authentication device P1C further determines whether the number of times of NG in which it is determined that the calculated quality score is not equal to or greater than the third threshold value is equal to or greater than a predetermined number of times (for example, three times, five times, or the like) (St65).

When it is determined in the processing of step St65 that the number of NG times is equal to or greater than the predetermined number of times (St65, YES), the authentication device P1C determines that the update of the visible face image has failed. The authentication device P1C generates an update failure screen (not illustrated) for notifying the user that the update of the visible face image has failed, and outputs (notifies) the update failure screen to the display 33 (St66).

On the other hand, when it is determined in the processing of step St65 that the number of NG times is not equal to or greater than the predetermined number of times (St65, NO), the authentication device P1C returns to step St11.

The face authentication server S1C overwrites (updates) the visible face image transmitted from the authentication device P1C with the registered visible face image associated with the user ID transmitted from the authentication device P1C (St67). After updating the registered visible face image, the face authentication server S1C generates an update completion notification of the registered visible face image and transmits the update completion notification to the authentication device P1C (St68).

Based on the update completion notification of the registered visible face image transmitted from the face authentication server S1C, the authentication device P1C generates an update completion notification screen (not illustrated) for notifying the user of the update completion of the registered visible face image, and outputs (notifies) the update completion notification screen to the display 33 (St69).

As described above, the authentication system 100C according to the fourth embodiment can update the registered visible face image registered in the registered invisible face image database DB12.

When the process proceeds to the acquisition processing of the invisible face image, the authentication device P1C generates a control command for imaging the user and transmits the generated control command to the third imaging device C5 (St70).

The third imaging device C5 generates a control command for requesting turning on of the lighting 93. The generated control command is transmitted to the lighting device L1 to request turning on of the lighting 93 (St71).

The lighting device L1 starts turning on the lighting 93 (St72).

The third imaging device C5 starts exposure of the third camera 80 (St73), and ends the exposure after the predetermined exposure time elapses (St74). After the exposure (imaging) ends, the third imaging device C5 acquires the third captured image (the invisible image) in which an image of the user is captured (St75), generates a control command for requesting turning off of the lighting 93, and transmits the control command to the lighting device L1 (St76).

The lighting device L1 turns off the lighting 93 and ends the turning on of the lighting 93 (St77).

The third imaging device C5 transmits the captured third captured image (the invisible image) to the authentication device P1C (St80).

The authentication device P1C generates an invisible face image by cutting out the face region of the user from the third captured image transmitted from the third imaging device C5, and calculates a quality score indicating likelihood that the generated invisible face image is an invisible face image suitable for face authentication using the invisible image (St81). The authentication device P1C determines whether the calculated quality score is equal to or greater than a fourth threshold value (St82).

When it is determined in the processing of step St82 that the calculated quality score is equal to or greater than the fourth threshold value (St82, YES), the authentication device P1C transmits the user ID transmitted from the face authentication server S1C and the generated invisible face image to the face authentication server S1C in association with each other (St83).

On the other hand, when it is determined in the processing of step St82 that the calculated quality score is not equal to or greater than the fourth threshold value (St82, NO), the authentication device P1C further determines whether the number of times of NG in which it is determined that the calculated quality score is not equal to or greater than the fourth threshold value is equal to or greater than a predetermined number of times (for example, three times, five times, or the like) (St84).

When it is determined in the processing of step St84 that the number of NG times is equal to or greater than the predetermined number of times (St84, YES), the authentication device P1C determines that the registration of the invisible face image has failed. The authentication device P1C generates a registration failure screen (not illustrated) for notifying the user that the registration of the invisible face image has failed, and outputs (notifies) the registration failure screen to the display 33 (St85).

On the other hand, when it is determined in the processing of step St84 that the number of NG times is not equal to or greater than the predetermined number of times (St84, NO), the authentication device P1C returns to step St70.

The face authentication server S1C registers (stores) the user ID transmitted from the authentication device P1C and the invisible face image in the registered invisible face image database DB12 in association with each other (St86). After registering the invisible face image, the face authentication server S1C generates a registration completion notification of the registered invisible face image and transmits the registration completion notification to the authentication device P1C (St87).

Based on the registration completion notification of the registered invisible face image transmitted from the face authentication server S1C, the authentication device P1C generates a registration completion notification screen (not illustrated) for notifying the user of the registration completion of the registered invisible face image, and outputs (notifies) the registration completion notification screen to the display 33 (St88).

The acquisition processing of the first captured image in steps St11 to St14 and the acquisition processing of the third captured image in steps St70 to St80 described above may be performed continuously or in parallel.

As described above, when the user authentication using the biometric information is successful, the authentication system 100C according to the fourth embodiment can acquire and register the new authentication data (here, the invisible face image) of the authenticated user. In addition, the authentication system 100C can update registered authentication data (here, the visible face image) registered in authentication using authentication data that changes over time, such as face authentication, or authentication using authentication data that is periodically changed/is to be periodically changed, such as a password or an employee ID card. Therefore, the authentication system 100C can improve authentication accuracy of multi-factor authentication.

As described above, the authentication devices P1 to P1C (the examples of the authentication information registration device) according to the first to fourth embodiments include the communication units 30 to 30C (the examples of the acquisition unit) configured to acquire first authentication information used for first authentication of a user (the example of a person to be authenticated) and second authentication information used for second authentication different from the first authentication, the control units 31 to 31C (the examples of the authentication unit) configured to authenticate the user based on the acquired first authentication information, and the control units 31 to 31C (the examples of the registration unit) configured to output information of the user and the second authentication information in association with each other and register the information of the user and the second authentication information in the face authentication server S1C, the fingerprint authentication server S2, the storage information authentication server S3, or the possession information authentication server S4 (the examples of the storage device) based on a result of the first authentication. The storage device may be the registered fingerprint image database DB2, the registered storage information database DB3, the registered possession information database DB4, or the registered invisible face image database DB12.

Accordingly, when the user authentication using the first authentication information is successful, the authentication devices P1 to P1C according to the first to fourth embodiments can acquire and register new authentication data (that is, the second authentication information) of the authenticated user. Therefore, the authentication devices P1 to P1C enable multi-factor authentication or multi-modal authentication in the next and subsequent user authentication.

The control units 31 to 31C of the authentication devices P1 to P1C according to the first to fourth embodiments determine whether the second authentication information is registered in the face authentication server S1C, the fingerprint authentication server S2, the storage information authentication server S3, or the possession information authentication server S4 when it is determined that the user has been authenticated based on the result of the first authentication, and output the information of the user and the second authentication information in association with each other to the face authentication server S1C, the fingerprint authentication server S2, the storage information authentication server S3, or the possession information authentication server S4 when it is determined that the second authentication information is not registered. Accordingly, the authentication devices P1 to P1C according to the first to fourth embodiments enable the multi-factor authentication or the multi-modal authentication in the next and subsequent user authentication by registering the new authentication data (the second authentication information).

In addition, the control units 31 to 31C of the authentication devices P1 to P1C according to the first to fourth embodiments omit the output of the information of the user and the second authentication information when it is determined that the second authentication information is registered in the face authentication server S1C, the fingerprint authentication server S2, the storage information authentication server S3, or the possession information authentication server S4. Accordingly, the authentication devices P1 to P1C according to the first to fourth embodiments can prevent the registered authentication data from being automatically updated.

The communication unit 30C of the authentication device P1C according to the fourth embodiment acquires new first authentication information of the user when it is determined that the second authentication information has been registered in the face authentication server S1C. The control unit 31C outputs the acquired new first authentication information, and updates registered authentication information used for collation with the first authentication information in the first authentication to the new first authentication information. Accordingly, in authentication using, for example, a face image, a password, or the like for which update of registered authentication data is desired, the authentication device P1C according to the fourth embodiment acquires and registers the authentication data for the update after the user is authenticated, so that it is possible to prevent impersonation by another user, and perform the multi-factor authentication or the multi-modal authentication with higher accuracy by updating the registered authentication data.

The control units 31 to 31C of the authentication devices P1 to P1C according to the first to fourth embodiments omit the output of the information of the user and the second authentication information when it is determined that the user is not authenticated based on the first authentication information. Accordingly, the authentication devices P1 to P1C according to the first to fourth embodiments can more effectively prevent erroneous registration of authentication data.

The first authentication information of the authentication devices P1 to P1C according to the first to fourth embodiments is biometric information of the user. The second authentication information is the biometric information, knowledge information, or possession information of the user. As a result, the authentication devices P1 to P1C according to the first to fourth embodiments can register new authentication data used for other authentication when a user is authenticated by biometric authentication that is more advanced authentication.

The control units 31 to 31C of the authentication devices P1 to P1C according to the first to fourth embodiments authenticate the user based on the first authentication information after the first authentication information and the second authentication information are acquired by the communication units 30 to 30C. As a result, the authentication devices P1 to P1C according to the first to fourth embodiments can further shorten a time required to acquire two different pieces of authentication information.

The communication units 30 to 30C of the authentication devices P1 to P1C according to the first to fourth embodiments acquire the second authentication information when it is determined that the user has been authenticated based on the first authentication information. Accordingly, the authentication devices P1 to P1C according to the first to fourth embodiments can more effectively prevent the erroneous registration of the authentication data.

The authentication systems 100 to 100C (the examples of the authentication information registration system) according to the first to fourth embodiments include the first imaging device C1 (the example of the first authentication information acquisition device) configured to acquire first authentication information used for first authentication of a user (the example of a person to be authenticated), the second imaging device C2, the storage information acquisition device C3, the possession information reading device C4, or the third imaging device C5 (the example of the second authentication information acquisition device) configured to acquire second authentication information used for second authentication different from the first authentication, the face authentication server S1C, the fingerprint authentication server S2, the storage information authentication server S3, or the possession information authentication server S4 (the example of the storage device) configured to record information of the user and the second authentication information used for the second authentication, the first authentication information acquisition device, the second authentication information acquisition device, and the authentication devices P1 to P1C (the example of the registration device) configured to communicate with the first authentication information acquisition device, the second authentication information acquisition device, the second imaging device C2, the storage information acquisition device C3, the possession information reading device C4, or the third imaging device C5. The authentication devices P1 to P1C acquire the first authentication information and the second authentication information, authenticate the user based on the acquired first authentication information, and output and register the information of the user and the second authentication information in association with each other in the face authentication server S1C, the fingerprint authentication server S2, the storage information authentication server S3, or the possession information authentication server S4 based on the result of the first authentication.

Accordingly, when the user authentication using the first authentication information is successful, the authentication systems 100 to 100C according to the first to fourth embodiments can acquire and register new authentication data (that is, the second authentication information) of the authenticated user. Therefore, the authentication systems 100 to 100C enables the multi-factor authentication or the multi-modal authentication in the next and subsequent user authentication.

Although various embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the embodiments described above may be combined freely in a range without departing from the spirit of the invention.

The present application is based on a Japanese patent application filed on June 30, 2023 (JP2023-108859A), and contents thereof are incorporated herein by reference.

### INDUSTRIAL APPLICABILITY

The present disclosure is useful as presentation of an authentication information registration device, an authentication information registration method, and an authentication information registration system that acquire authentication data used for a plurality of different types of authentication.

### REFERENCE SIGNS LIST

30, 30A, 30B, 30C, 40, 40C, 50, 60, 70, 90 communication unit
31, 31A, 31B, 31C, 41, 41C, 51, 61, 71, 91 control unit
100, 100A, 100B, 100C authentication system
C1 first imaging device
C2 second imaging device
C3 storage information acquisition device
C4 possession information reading device
C5 third imaging device
DB1 registered face image database
DB2 registered fingerprint image database
DB3 registered storage information database
DB4 registered possession information database
DB11 registered visible face image database
DB12 registered invisible face image database
L1 lighting device
P1, P1A, P1B, P1C authentication device
S1, S1C face authentication server
S2 fingerprint authentication server
S3 storage information authentication server
S4 possession information authentication server

## Claims

1. An authentication information registration device comprising:
an acquisition unit configured to acquire first authentication information used for first authentication of a person to be authenticated and second authentication information used for second authentication different from the first authentication;
an authentication unit configured to authenticate the person to be authenticated based on the acquired first authentication information; and
a registration unit configured to output information of the person to be authenticated and the second authentication information in association with each other and register the information of the person to be authenticated and the second authentication information in a storage device based on a result of the first authentication.

2. The authentication information registration device according to claim 1, wherein
the registration unit determines whether the second authentication information is registered in the storage device when it is determined that the person to be authenticated has been authenticated based on the result of the first authentication, and outputs the information of the person to be authenticated and the second authentication information in association with each other to the storage device when it is determined that the second authentication information is not registered.

3. The authentication information registration device according to claim 2, wherein
the registration unit omits the output of the information of the person to be authenticated and the second authentication information when it is determined that the second authentication information is registered in the storage device.

4. The authentication information registration device according to claim 2, wherein
the acquisition unit acquires new first authentication information of the person to be authenticated when it is determined that the second authentication information has been registered in the storage device, and
the registration unit outputs the acquired new first authentication information and updates registered authentication information used for collation with the first authentication information in the first authentication to the new first authentication information.

5. The authentication information registration device according to claim 1, wherein
the registration unit omits the output of the information of the person to be authenticated and the second authentication information when it is determined that the person to be authenticated is not authenticated based on the first authentication information.

6. The authentication information registration device according to claim 1, wherein
the first authentication information is biometric information of the person to be authenticated, and
the second authentication information is the biometric information, knowledge information, or possession information of the person to be authenticated.

7. The authentication information registration device according to claim 1, wherein
the authentication unit authenticates the person to be authenticated based on the first authentication information after the first authentication information and the second authentication information are acquired by the acquisition unit.

8. The authentication information registration device according to claim 1, wherein
the acquisition unit acquires the second authentication information when it is determined that the person to be authenticated has been authenticated based on the first authentication information.

9. An authentication information registration method performed by a registration device that registers authentication information used for authentication of a person to be authenticated, the authentication information registration method comprising:
an acquisition unit configured to acquire first authentication information used for first authentication of the person to be authenticated and second authentication information used for second authentication different from the first authentication;
an authentication unit configured to authenticate the person to be authenticated based on the acquired first authentication information; and
outputting and registering information of the person to be authenticated and the second authentication information in association with each other in a storage device based on a result of the first authentication.

10. An authentication information registration system comprising:
a first authentication information acquisition device configured to acquire first authentication information used for first authentication of a person to be authenticated;
a second authentication information acquisition device configured to acquire second authentication information used for second authentication different from the first authentication;
a storage device configured to record information of the person to be authenticated and the second authentication information used for the second authentication; and
a registration device configured to communicate with the first authentication information acquisition device, the second authentication information acquisition device, and the storage device, wherein
the registration device
acquires the first authentication information and the second authentication information,
authenticates the person to be authenticated based on the acquired first authentication information, and
outputs and registers the information of the person to be authenticated and the second authentication information in association with each other in the storage device based on a result of the first authentication.
